# EUROPÄISCHE PATENTSCHRIFT

(11) **EP 1 917 592 B1**
(45) Veröffentlichungstag und Bekanntmachung des Hinweises auf die Patenterteilung: **03.06.2009**
(21) Anmeldenummer: 06792577.6
(22) Anmeldetag: 26.07.2006
(51) Int. Cl.: G06F 11/16

(54) **RECHNERSYSTEMS MIT WENIGSTENS ZWEI AUSFÜHRUNGSEINHEITEN UND EINER VERGLEICHSEINHEIT SOWIE VERFAHREN ZU DESSEN STEUERUNG**
COMPUTER SYSTEM WITH AT LEAST TWO EXECUTION UNITS AND A COMPARISON UNIT AND METHOD FOR CONTROLLING THE SAME
SYSTEME INFORMATIQUE COMPRENANT AU MOINS DEUX UNITES D'EXECUTION ET UNE UNITE DE COMPARAISON ET SON PROCEDE DE COMMANDE

(30) Priorität: 08.08.2005 DE 102005037246
(43) Veröffentlichungstag der Anmeldung: 07.05.2008
(73) Patentinhaber: ROBERT BOSCH GMBH, 70442 Stuttgart (DE)
(72) Erfinder: WEIBERLE, Reinhard, 71665 Vaihingen/Enz (DE); MUELLER, Bernd, 70839 Gerlingen (DE); GMEHLICH, Rainer, 71254 Ditzingen (DE)
(86) Internationale Anmeldenummer: PCT/EP2006/064690
(87) Internationale Veröffentlichungsnummer: WO 2007/017386

(56) Entgegenhaltungen:
- US-A- 3 898 621
- US-A- 5 748 873
- US-B1- 6 393 582
- US-B1- 6 615 366

## Beschreibung

### Stand der Technik

Die Erfindung betrifft eine Vorrichtung und ein Verfahren zur Aufrechterhaltung einer Systemfunktion bei Fehlern in einem Prozessorsystem mit zwei Cores sowie ein entsprechendes Prozessorsystem gemäß den Oberbegriffen der unabhängigen Ansprüche.

Aus dem Stand der Technik sind Redundanzen z.B. von Mikrocontrollern (µC), aber auch von Komponenten eines µCs wie beispielsweise der CPU (Central Processing U-nit) zum Zweck der Fehlererkennung bekannt. Dabei werden redundant berechnete Daten und redundant generierte Signale von einer Vergleichseinheit auf Übereinstimmung verglichen. Derartige Prozessoren sind beispielsweise aus der US 6393582 B1 bekannt.

Ein Mikrocontroller mit redundanten CPUs wird auch als Dual Core Mikrocontroller (Dual Core µC) bezeichnet. In einem Dual Core µC können die beiden CPUs taktsynchron, also parallel (im Lock-Step Mode) oder um einige Takte zeitversetzt arbeiten. Beide CPUs empfangen dieselben Eingangsdaten und arbeiten das gleiche Programm bzw. die gleichen Befehle ab. Liegt in einem der redundant implementierten Cores ein Fehler vor, der sich auf wenigstens ein Ausgangssignal dieses Cores auswirkt, so hat dies eine Diskrepanz der zu vergleichenden Daten zur Folge, die von der Vergleichseinheit erkannt wird. Ausgangssignale können dabei neben den "Data Out"-Daten auch die Instruktionsadresse und die Kontrollsignale umfassen. Die Vergleichseinheit erzeugt bei einer erkannten Diskrepanz der zu vergleichenden Signale ein Status- oder Fehlersignal, mit dem das Vergleichsergebnis nach außen signalisiert werden kann. Ohne zusätzliche Fehlererkennungsmechanismen für die redundant implementierten Einheiten ist es jedoch weder möglich, die fehlerbehaftete Komponente zu lokalisieren, noch die Art der Fehlerursache zu ermitteln.

Beim Einsatz der oben beschriebenen Redundanzen in sicherheitsrelevanten Steuer- und Regelsystemen erfolgt nach einer erkannten Diskrepanz der redundant ermittelten Signale in der Regel eine Umschaltung in einen 'sicheren Zustand' des Gesamtsystem, auch wenn die Ursache der Diskrepanz ein transienter Fehler mit nur kurzer Wirkdauer war. In Automobilsystemen wie z. B. einem ESP-System bedeutet der 'sichere Zustand' meist ein Abschalten des Systems.

Aufgrund der immer kleiner werdenden Halbleiterstrukturen wird eine Zunahme von transienten Prozessorfehlern erwartet, die z.B. durch kosmische Strahlung hervorgerufen werden. Um mit transienten Fehlern so umgehen zu können, dass man auf eine Abschaltung des Systems verzichten und während des Betriebs den Fehler tolerieren oder sogar "heilen" kann, gibt es im Stand der Technik schon einige Lösungen: Mit meist aufwändigen Verfahren werden Fehler durch anwendungsspezifische, oft modellgestützte Plausibilisierungen detektiert, ggf. wird ein Reset des Rechnersystems ausgelöst. Das Rechnersystem initialisiert sich neu und ist nach der Initialisierungszeit und einer optionalen "Wiedergutprüfung" (nach z.B. wenigen 100 ms) wie der betriebsbereit (sog. "forward recovery"). Bei nicht-echtzeitfähigen Anwendungen (z.B. Transaktionen an Finanzmärkten) wird anwendungsspezifisch ein Zustand vor der Transaktion gebildet, der gespeichert und erst dann als ungültig verworfen wird, wenn ein bestätigtes erfolgreiches Ende der Transaktion vorliegt. Bei auftretenden Fehlern während der Transaktion wird auf den gespeicherten Anfangspunkt zurückgesprungen ("backward recovery"). In Echtzeitsystemen sind solche Lösungen sehr aufwändig und meist wird die Funktion für die Zeitdauer eines Resets oder einer Wiedergutprüfung des Prozessorsystems unterbrochen.

Mit steigendem Funktionsumfang elektronischer Regelsysteme im Fahrzeug stellt ein Abschalten eines Systems wie z.B. ESP mit Lenkeingriff nicht in jedem Betriebszustandeinen Übergang in einen sicheren Systemzustand dar.

### Vorteile der Erfindung

Aufgabe der Erfindung ist ein Verfahren zum Betreiben eines Dual Core Prozessors (oder eines Dual Prozessor Systems) mit dem Ziel einer höheren Robustheit gegenüber Fehlern und einer erhöhten (Teil-) Verfügbarkeit der Systemfunktion bei transienten und permanenten Fehlern im Prozessorsystem. In einem vorteilhaften Ausführungsbeispiel kann dies unter Beibehaltung der ursprünglichen Ausführungszeit für die einzelnen Programmteile erreicht werden.

Bei einem Dual Core Rechner nach dem Stand der Technik, der im Lockstep-Mode betrieben wird, arbeitet eine CPU als Master, eine zweite CPU als Slave. Die Ergebnisse der SlavaCPU werden nur zum Vergleich der Ergebnisse der Master-CPU herangezogen. Einzig die Master-CPU kann Ergebnisse auf den Daten-/Adressbus oder in CPU-Register schreiben.

Hierbei besteht die Möglichkeit der wechselnden Zuteilung der Masterfunktion auf die wenigstens zwei Ausführungseinheiten und damit der alternierenden Verwendung der Core-Resultate eines Dual Core oder Multi Core Rechners, der im Lockstep-Mode betrieben wird. Damit kann unter Beachtung gewisser Randbedingungen auch nach Erkennen einer Diskrepanz der redundant errechneten Ergebnisse ein eingeschränkter Betrieb des Prozessorsystems aufrecht erhalten werden. Dies ist vor allem in Echtzeitanwendungen von Vorteil, bei dem eine Abschaltung des Systems aufgrund von Prozessorfehlern nicht in jedem Betriebszustand erwünscht ist.

Es ergibt sich ein weiterer Vorteil daraus, dass ein Fehler in den Ausführungseinheiten des Prozessorsystems lokalisiert werden kann, die fehlerbehaftete Ausführungseinheit deaktiviert wird und das System mit der richt fehlerbehafteten Ausführungseinheit solange weiterbetrieben wird, bis ein zum Abschalten unkritischer Systemzustand erreicht oder eine zuvor festgelegte max. Betriebsdauer in diesem Modus überschritten wird.

Beanspruckt ist ein Verfahren zur Steuerung eines Rechnersystems mit wenigstens zwei Ausführungseinheiten und einer Vergleichseinheit beschrieben, das im Lock-Step betrieben wird und bei dem die Ergebnisse der wenigstens zwei Ausführungseinheiten verglichen werden, dadurch gekennzeichnet, dass bei oder nach Erkennen eines Fehlers durch die Vergleichseinheit die aktuelle Befehlssequenz auf genau einer Ausführungseinheit abgebrochen wird, auf dieser einen Ausführungseinheit ein Fehlererkennungsmechanismus abgearbeitet wird, die Vergleichseinheit der wenigstens zwei Ausführungseinheiten für die Dauer der Abarbeitung des Fehlererkennungsmechanismus abgeschaltet wird und auf der wenigstens einen weiteren Ausführungseinheit die bestimmungsgemäße Programmfolge weiter abgearbeitet wird. Vorteilhaft ist ein Verfahren beschrieben, dadurch gekennzeichnet, dass nach Abarbeitung des Fehlererkennungsmechanismus der bestimmungsgemäße Programmablauf fortgesetzt wird, falls der Fehlererkennungsmechanismus keinen Fehler erkannt hat. Vorteilhaft ist ein Verfahren beschrieben, dadurch gekennzeichnet, dass bei oder nach Lokalisierung eines Fehlers auf einer Ausführungseinheit die fehlerbehaftete Ausführungseinheit abgeschaltet wird. Vorteilhaft ist ein Verfahren beschrieben, dadurch gekennzeichnet, dass die Vergleichseinheit deaktiviert wird. Vorteilhaft ist ein Verfahren beschrieben dadurch gekennzeichnet, dass bei Deaktivierung wenigstens einer Komponente ein Fehlersignal erzeugt wird, das der Anwendung zur Verfügung gestellt wird. Vorteilhaft ist ein Verfahren beschrieben, dadurch gekennzeichnet, dass nach Auftreten eines Fehlers der Betrieb mit nur einer Ausführungseinheit zeitlich begrenzt ist und das Rechnersystem spätestens nach Ablauf einer zuvor festgelegten Zeit abgeschaltet wird. Vorteilhaft ist ein Verfahren beschrieben, dadurch gekennzeichnet, dass die Abschaltung bereits vor Ablauf einer zuvor festgelegten Zeit durch ein von der Anwendung generiertes Signal abgeschaltet wird beansprucht ist ein entsprechendes Rechnersystems mit wenigstens zwei Ausführungseinheiten und einer Vergleichseinheit, das im Lock-Step betrieben wird und bei dem die Ergebnisse der wenigstens zwei Ausführungseinheiten verglichen werden.

Weitere Vorteile und vorteilhafte Ausgestaltungen ergeben sich aus den Merkmalen der Ansprüche sowie der Beschreibung

### Figuren

- In Figur 1: ist ein Dual Core Prozessor mit einer Master-CPU und einer Slave- CPU gezeigt
- Figur 2: zeigt einen Dual Core Prozessor mit zwei Systemschnittstellen
- In Figur 3: ist ein Dual Core Prozessor mit zusätzlichem Eingangssignal der Ver- gleichseinheit gezeigt.
- In Figur 4: ist ein Dual Core Prozessor mit zusätzlichem Fehlersignal der Ver- gleichseinheit gezeigt
- In Figur 5: ist ein erstes Verfahren zur Fehlerbehandlung in einem Prozessorsys- tem anhand eines Ablaufdiagrams gezeigt
- In Figur 6: ist ein zweites Verfahren zur Fehlerbehandlung in einem Prozessor- system anhand eines Ablaufdiagrams gezeigt

### Beschreibung der Ausführungsbeispiele

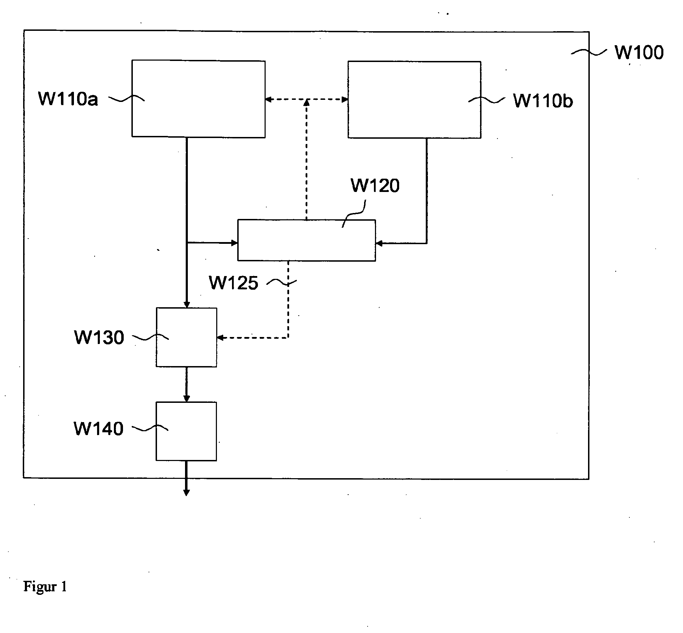

In Figur 1 ist ein Prozessorsystem W100 mit mehreren Ausführungseinheiten W110a, W110b, z. B. ein Dual Core Rechner, und einer vorzugsweise in HW realisierten Vergleichseinheit W120 gezeigt. Dieses Prozessorsystem wird im Lockstep-Mode betrieben. In dieser Betriebsart werden die Ergebnisse der Ausrührungseinheiten verglichen, vorzugsweise nach jedem Block Cycle. Eine Ausführungseinheit kann dabei sowohl als Prozessor/Core/CPU, als auch als CPU (Floating Point Unit), DSP (Digitaler Signalprozessor), als Coprozessor oder als ALU (Arithmetic logical Unit), jeweils mit einer beliebigen Anzahl an zugeordneten Registersätzen, realisiert sein. Dabei ist genau eine Ausführungseinheit über eine Unterbrechungs- bzw. Freigabeeinheit W130 mit einer Systemschnittstelle W140 oder direkt mit dem Daten-/Adressbus des Prozessorsystems verbunden. Diese Ausführungseinheit erzeugt als einzige Resultate, die im Prozessorsystem weiterverarbeitet werden. Deshalb wird die mit der Systemschnittstelle W130 oder dem Daten-/Adressbus des Prozessorsystems verbundene Ausführungseinheit als Master bezeichnet. Die Ausgangssignale der wenigstens einen weiteren Ausführungseinheit werden nur an die Vergleichseinheit W120 geführt und dort zur Plausibilisierung der Ausgangssignale des Masters verwendet. Die Vergleichseinheit W120 steuert die Unterbrechungs bzw. Freigabeeinheit W130 über ein Signal W125, welches eine den Vergleich repräsentierende Information darstellt. Ein solches System mit genau zwei Ausführungseinheiten, die als CPUs realisiert sind, ist als Dual Core Mikrocontroller aus dem Stand der Technik bekannt.

Im Unterschied zu einem bekannten Dual Core Mikrocontroller, der im Lockstep-Mode betrieben wird, wird in einem ersten Ausführungsbeispiel der vorliegenden Erfindung unter Einhaltung gewisser Randbedingungen auch bei einer Diskrepanz der Ausgangssignale der redundanten Ausführungseinheiten ein Wert in ein Register oder einen Speicher geschrieben bzw. auf den Daten-/Adressbus ausgegeben.

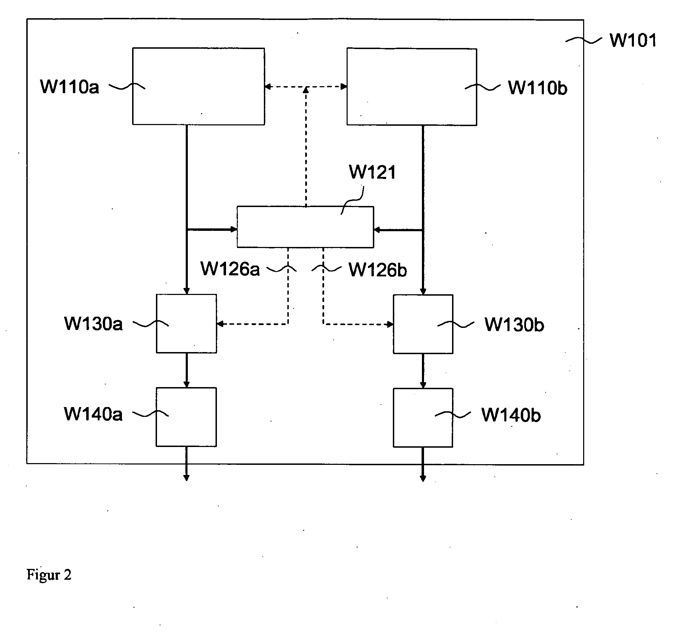

In einem in Figur 2 dargestellten System enthält das Prozessorsystem W101 eine gegenüber dem Prozessorsystem W100 nach Figur 1 erweiterte Vergleichseinheit W121, zwei Unterbrechungs- bzw. Freigabeeinheiten W130a, W130b, über die die Ausführungseinheiten W110a, W110b mit den Systemschnittstellen W140a, W140b oder mit dem Daten-/Adressbus verbunden werden können und die von der Vergleichseinheit über Signale W126a, W126b angesteuert werden. Dabei kann aber im gesamten Prozessorsystem immer nur einer Ausrührungseinheit die Masterfunktion zugeordnet sein, d.h. es kann immer nur maximal eine Ausführungseinheit mit einer Systemschnittstelle oder dem Daten-/Adressbus verbunden sein. Die Zuordnung der Masterfunktion bzw. die Umschaltung derselben erfolgt dabei über die Steuerung der Unterbrechungs- bzw. Freigabeeinheiten W130a, W130b. Diese werden von der Vergleichseinheit W121 abhängig von dem Vergleichsergebnis der Ausgangssignale der wenigstens zwei Ausführungseinheiten angesteuert.

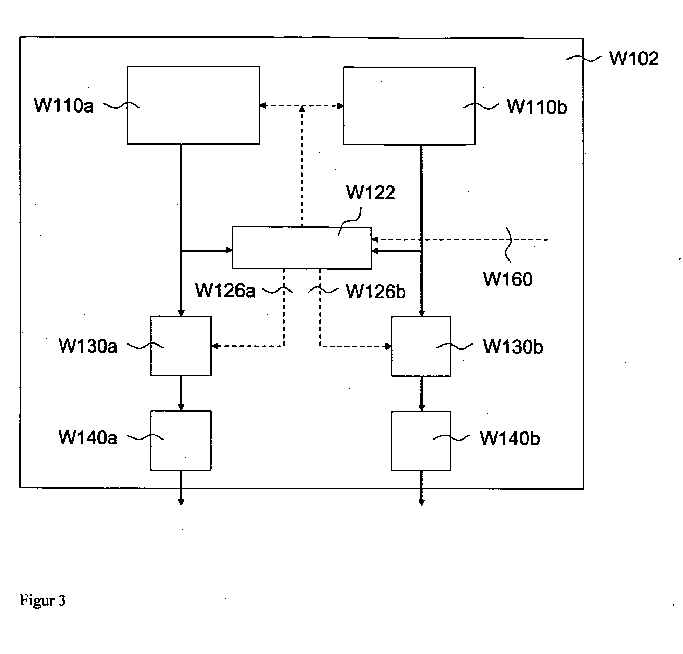

In einem in Figur 3 dargestellten System wird die Umschaltung der Masterfunktion durch die Vergleichseinheit W122 vorgenommen, die die Masterfunktion abhängig von wenigstens einem Eingangssignal W160 oder einer Kennung dieses Eingangssignals über die Ansteuerung der Unterbrechungs- bzw. Freigabeeinheiten W130a, W130b mittels der Signale W126a und W126b zwischen den wenigstens zwei Ausführungseinheiten W110a, W110b umschaltet oder das System abschaltet.

Das Eingangssignals W160 oder eine Kennung desselben kann in Abhängigkeit der Zeit oder eines Befehlszählers (z.B. alle 10 Taktzyklen oder alle 10 Befehle) generiert werden, vorzugsweise durch eine spezifische Hardwarekomponente, oder kann durch das Betriebssystem, z.B. abhängig vom Scheduling der Laufzeitobjekte generiert werden (Beispielsweise kann bei jedem Aufruf eines Laufzeitobjekts umgeschaltet werden oder bei jedem Betriebssystemzyklus), oder kann abhängig von einer Kennung im Programmcode sein, oder kann durch einen Interrupt bzw. ein Signal einer Unterbrechungsanforderungseinheit generiert werden, oder kann abhängig vom Zugriff auf einen bestimmten Speicherbereich im Programm- und/oder Datenspeicher sein.

Eine Zuordnung bzw. Umschaltung der Masterfunktion kann abhängig von einer der vorgenannten Bedingungen, abhängig vom Vergleichsergebnis der Vergleichseinheit W122 oder einer Kombination von mehreren dieser Bedingungen sein.

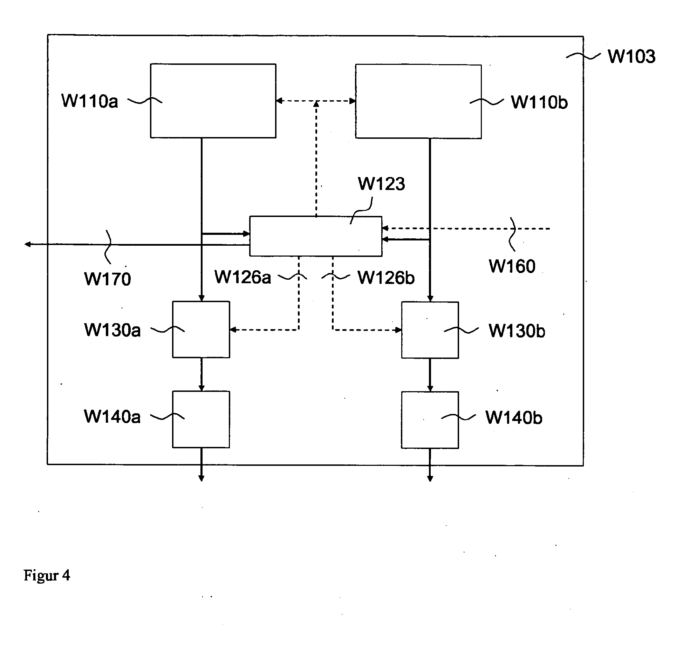

Bei Diskrepanz der Ausgangssignale der Ausführungseinheiten wird von der Vergleichseinheit ein internes Fehlersignal erzeugt. In Abhängigkeit vom Systemstatus, der der Vergleichseinheit über das Signal W160 mitgeteilt wird, kann anstelle des Abschalten des Systems eine Umschaltung der Masterfunktion von einer Ausführungseinheit auf die andere Ausführungseinheit erfolgen. Bei jeder weiteren Diskrepanz der Ausgangssignale wird dieser Vorgang wiederholt, also die Masterfunktion der jeweils anderen Ausführungseinheit zugeteilt. Zu beachten ist dabei, das der Master seine Ergebnisse, unabhängig vom Ergebnis eines Vergleichs, über die jeweilige Systemschnittstelle W140 weitergibt. Die Vergleichseinheit detektiert nur einen Unterschied, unterdrückt aber nicht ein Schreiben des jeweilige Masters. In der Vergleichseinheit W122 können nun weitere Mittel enthalten sein, die abhängig von einem Fehlerzähler, der die erkannten Diskrepanzen zählt, das System nachdem eine vorgebare Anzahl von Fehlern überschritten ist, abschaltet. Dieses System kann auch wie in Figur 4 dargestellt ein externes Fehlersignal W170 durch die Vergleichseinheit W123 erzeugen. Dieses Fehlersignal kann in externen Einheiten, dem Betriebssystem oder der Anwendung ausgewertet werden und der Vergleichseinheit W123 über das Signal W160 mitgeteilt werden, dass das System abgeschaltet werden soll. Diesen Ausführungsformen ist gemeinsam, dass bei einem Fehler das Prozessorsystem damit nicht sofort abgeschaltet, sondern weiter betrieben wird. Durch den Wechsel der Masterfunktion wird auch bei einem permanenten Fehler in einer der Ausführungseinheiten ermöglich, dass mindestens jedes zweite Ergebnis korrekt ist. Je nach Anwendungsfunktion reicht dies aus, um ein System für eine gewisse Zeit mit ausreichender Funktionsqualität weiter betreiben zu können.

Viele Funktionen zur Signalaufbereitung und zur Regelung mechatronischer Systeme im Kraftfahrzeug weisen ein robustes Design auf, d.h. kurzzeitige Störungen (z.B. durch EMV-Einstrahlung oder durch Einwirkung von Störgrößen in einen Regelkreis) haben in solchen System keine sicherheitskritischen Auswirkungen und können damit toleriert werden. Länger anhaltende Störungen werden aber auch von solchen "robusten" Systemen nicht toleriert. Bei sdchen robusten Funktionen muss das Prozessorsystem nach Auftreten eines Fehlers, d.h. nach Erkennen einer Diskrepanz durch die Vergleichseinheit nicht sofort abgeschaltet werden. Bei einer transienten Fehlerursache mit kurzer Wirkdauer ist der Fehler beim nächsten Aufruf meist nicht mehr vorhanden. Durch eine alternierende Verwendung der Ausgangssignale der Ausfürungseinheiten bzw. der wechselnden Zuteilung der Masterfunktionen in einem Prozessorstem mit mehreren Ausführungseinheiten wirkt sich auch ein permanenter Fehler in einer der Ausführungseinheiten nicht dauerhaft auf die Anwendung aus, sondern nur intermittierend. Somit kann mit einer Abschaltung des Prozessorsystems im Fehlerfall so lange gewartet werden, bis ein Fehler eindeutig als permanenter Fehler erkannt ist oder ein zur Abschaltung geeigneter Systemzustand des Anwendungssystems erreicht ist.

Anders als bei der beanspruchten Erfindung kann in einem System bei erkannter Diskrepanz der Ausgangssignale der wenigstens zwei Ausführungseinheiten die Abarbeitung der aktuellen Befehlssequenz (Programmblock, Task) auf allen Ausführungseinheiten abgebrochen. Anstelle der abgebrochenen Befehlssequenz werden in allen Ausführungseinheiten Fehlererkennungsroutinen wie z.B. ein BIST (Built-In-Self-Test) oder ein softwarebasierter Selbsttest abgearbeitet. Durch Vergleich der Ergebnisse der Fehlererkennungsroutinen mit abgespeicherten Referenzwerten kann ein Fehler erkannt und lokalisiert werden. Bei erkanntem und lokalisiertem Fehler wird die fehlerhafte Ausführungseinheit abgeschaltet. Die nicht fehlerbehaftete Einheit bleibt weiter in Betrieb, solange bis ein zum Abschalten sicherer Systemzustand erreicht ist. Eine Abschaltung einer fehlerbehafteten Ausführungseinheit kann dadurch erfolgen, dass die Vergleichseinheit deaktiviert wird und die dieser Ausführungseinheit zugeordnete Unterbrechungs- bzw. Freigabeeinheit W130a bzw. W130b keine Verbindung dieser Ausführungseinheit zur Systemschnittstelle bzw. zum Adress-/Datenbus erlaubt oder dadurch, dass dieser Ausführungseinheit keine Instruktionen, Daten und/oder Taktsignale zugeführt werden.

Zur Deaktivierung der Vergleichseinheiten gibt es verschiedene Möglichkeiten. Zum einen kann man an die Vergleichseinheit ein Signal führen, mit dem die Vergleichslogik bzw. Vergleichsfunktion aktiviert oder deaktiviert wird. Dazu ist im Vergleicher eine zusätzliche Logik einzufügen, die abhängig von einem solchen Signal eine Aktivierung bzw. Deaktivierung der Vergleichsfunktion durchführen kann. Eine weitere Möglichkeit ist es, der Vergleichseinheit keine zu vergleichenden Daten zuzuführen. Eine dritte Möglichkeit ist es, auf Systemebene das Fehlersignal W170 der Vergleichseinheit W123 nach Figur 4 zu ignorieren, das Fehlersignal W170 selbst zu unterbrechen oder das Vergleichsergebnis in diesem Fall nicht zur Generierung von Steuersignalen, wie z.B. den Signalen W126a und W126b aus Figur 2 und Figur 3 heranzuziehen. Allen Möglichkeiten ist gemeinsam, dass sie im System einen Zustand erzeugen, bei dem es keine Rolle spielt, wenn sich die Ausgangssignale der Ausführungseinheiten unterscheiden. Wird dieser Zustand durch eine Maßnahme im Vergleicher oder dessen Ein- oder Ausgangssignalen erreicht, dann wird der Vergleicher als passiv oder deaktiviert bezeichnet.

Wird bei der Abarbeitung der Fehlerentdeckungsmechanismen kein Fehler in den Ausführungseinheiten gefunden, wird die nächste Task im Lock-Step gestartet. Wird wieder eine Diskrepanz der Ausgangssignale erkannt, erfolgt nochmals die oben beschriebene Vorgehensweise, allerdings muss die Anzahl n der Wiederholungen begrenzt sein. Die Begrenzung kann in Abhängigkeit der Fehlertoleranzzeit der Anwendung erfolgen. Wird nach n-maliger Wiederholung wieder ein Fehler erkannt, so wird das System sofort abgeschaltet.

Das Ausführungsbeispiel nach Figur 4 basiert auf einem Prozessorsystem mit Dual Core-Architektur und einer vorzugsweise in HW realisierten Vergleichseinheit, das neben dem Lock-Step Betriebsmodus wenigstens einen zweiten Betriebsmodus ermöglicht, in dem die beiden Ausführungseinheiten W110a, W110b zeitgleich unterschiedliche Programme, Programmsegmente oder Befehle abarbeiten. Arbeitet das Prozessorsystem im Lock-Step Betriebsmodus und stellt der Vergleicher eine Diskrepanz der Ergebnisse fest, so wird in der Ausführungseinheit im Beispiel W110b, die gerade nicht mit der Systemschnittstelle bzw. dem Daten-/Adressbus verbunden ist, die Ausführung des aktuellen Programmsegments oder Laufzeitobjekts (im Folgenden als 'Task' bezeichnet) abgebrochen und eine Fehlererkennungsroutine (z.B. BIST) gestartet. Die andere Ausführungseinheit im Bsp. W110a arbeitet weiter die aktudle Task ab, dies allerdings mit einer statistischen Fehlerwahrscheinlichkeit von 50%. Hat die Fehlererkennungsroutine auf W110b bis zum Ende der auf W110a ablaufenden Task einen Fehler in W110b erkannt (z.B. durch Vergleich mit abgespeicherten Referenzwerten), so wird W110b abgeschaltet und W110a arbeitet in einem Single-Mode (ohne Vergleich bzw. mit deaktivierter Vergleichseinheit) solange weiter, bis das Gesamtsystem einen beim Abschalten unkritischen Zustand erreicht hat. Dann wird das Mikroprozessorsystem abgeschaltet. Hat W110b bis zum Taskende von W110a keinen Fehler gefunden, so wird die nächste Task wieder im Lock-Step begonnen, dieses mal wird aber W110b mit der Systemschnittstelle bzw. dem Daten-/Adressbus verbunden. Tritt keine Diskrepanz mehr auf, so war die Diskrepanz bei der vorigen Task mit hoher Wahrscheinlichkeit eine Auswirkung eines transienten Fehlers. Tritt wieder eine Diskrepanz auf, so wird dieses Mal in der Ausführungseinheit W110a die aktuelle Task abgebrochen und eine Fehlererkennungsroutine (z.B. BIST) gestartet. Dieses Vorgehen wird bis zu Beginn der nächsten (oder in einer konfigurierbaren Anzahl von) 'Dispatcher-Round(s)' (Betriebssystem-Zyklus) wiederholt. Ist dann weiterhin eine Diskrepanz der Ergebnisse vorhanden, obwohl kein Fehler lokalisiert wurde, lässt dies auf einen permanenten Fehler schließen, der durch die Fehlererkennungsmechanismen nicht lokalisiert wurde und das Mikroprozessorsystem wird komplett abgeschaltet.

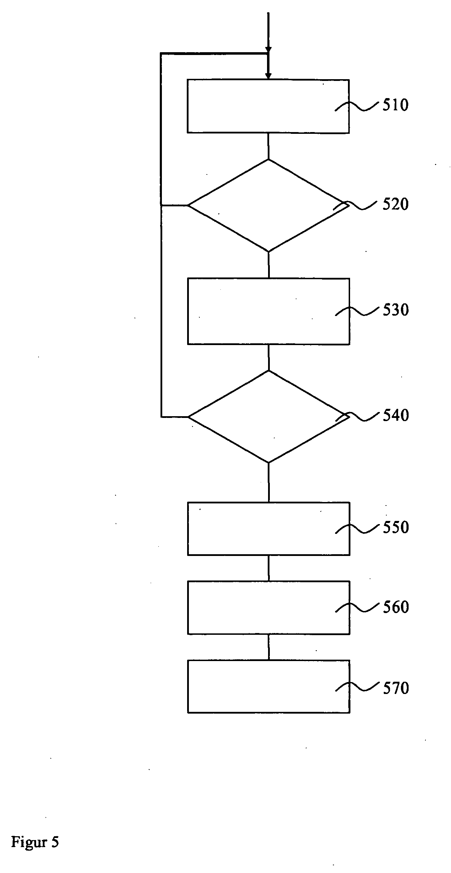

In Figur 5 ist ein nicht beanspruchtes Verfahren zur Steuerung eines Prozessorsystems nach Auftreten einer Diskrepanz der Ausgangssignale der Ausführungseinheiten beispielhaft beschrieben.

Im Schritt 510 werden in wenigstens zwei Ausführungseinheiten die gleichen Befehle oder Programmsegmente abgearbeitet.

Im Schritt 520 werden die Ausgangssignale dieser wenigsten zwei Ausführungseinheiten auf Übereinstimmung verglichen. Sind die Ausgangssignale identisch bzw. innerhalb eines definierten Toleranzbandes, so wird erneut der Schritt 510 gestartet, dieses mal mit neuen Programmsegmenten oder Befehlen und/oder Daten. Wird in Schritt 520 eine Diskrepanz der Ausgangssignale erkannt, wird als nächstes der Schritt 530 ausgeführt.

Im Schritt 530 wird die aktuelle Programmabarbeitung unterbrochen und auf allen Ausführungseinheiten wird eine Fehlererkennungsroutine ausgeführt. Dabei muss die Verbindung der Ausführungseinheit mit der Systemschnittstelle bzw. dem Daten-/Adressbus unterbrochen werden.

Im Schritt 540 werden die Ergebnisse der Fehlererkennungsroutinen jeweils mit einem Referenzwert verglichen, der zusammen mit dem Programmcode der Fehlererkennungsroutinen abgespeichert ist. Tritt bei diesem Vergleich eine Diskrepanz auf, so wird die Ausführungseinheit, deren Ergebnis beim Vergleich zu einer Diskrepanz geführt hat, als fehlerhaft gekennzeichnet und als nächstes der Schritt 550 ausgeführt. Tritt keine Diskrepanz auf, so wird erneut der Schritt 510 gestartet, dieses mal mit neuen Programmsegmenten oder Befehlen und/oder Daten.

Im Schritt 550 werden die als fehlerhaft gekennzeichneten Ausführungseinheiten und die Vergleichseinheit deaktiviert. Eine Abschaltung einer Ausführungseinheit kann z.B. dadurch erfolgen, dass dieser Ausführungseinheit keine Instruktionen, Daten und/oder Taktsignale zugeführt werden, oder dass die Verbindung dieser Ausführungseinheit zur Vergleichseinheit und zur Systemschnittstelle bzw. zum Daten-/Adressbus unterbrochen wird

Im Schritt 560 wird das Prozessorsystem mit den verbleibenden, nicht fehlerbehafteten Ausführungseinheiten weiterbetrieben. In einem Prozessorsystem mit zwei Ausführungseinheiten bedeutet dies einen Single-Core Betrieb. Dieser ist bei sicherheitsrelevanten Systemen zeitlich begrenzt.

Im Schritt 570 erfolgt nach Erreichen einer Abschaltbedingung, z.B. nach Überschreiten eines Zeitlimits für den Single-Core Betrieb, ein Abschalten des Prozessorsystems oder eine Umschaltung in einen definierten sicheren Zustand.

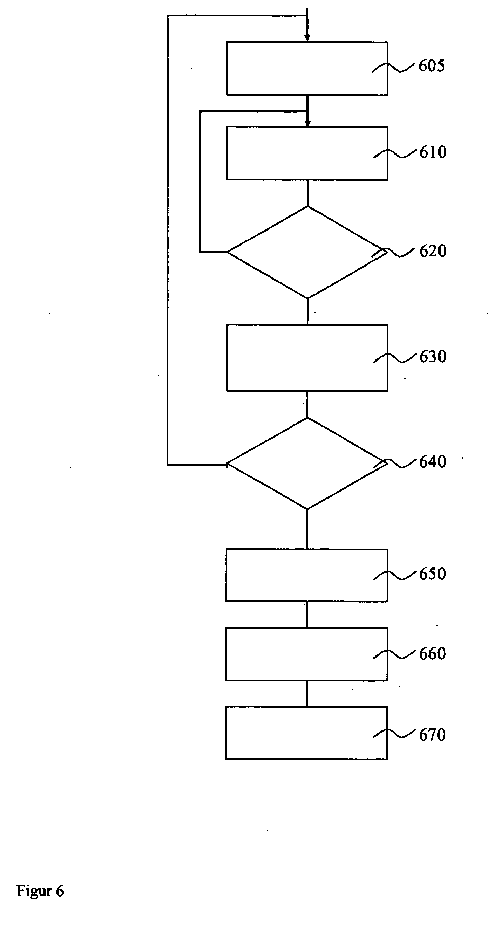

In Figur 6 ist ein beanspruchtes Verfahren zur Steuerung eines Prozessorsystems nach Auftreten einer Diskrepanz der Ausgangssignale der Ausführungseinheiten beispielhaft beschrieben.

Im Schritt 605 wird die Masterfunktion von einer ersten auf eine zweite Ausführungseinheit gewechselt.

Im Schritt 610 werden in wenigstens zwei Ausführungseinheiten die gleichen Befehle oder Programmsegmente abgearbeitet.

Im Schritt 620 werden die Ausgangssignale dieser wenigsten zwei Ausführungseinheiten auf Übereinstimmung verglichen. Sind die Ausgangssignale identisch bzw. innerhalb eines definierten Toleranzbandes, so wird erneut der Schritt 610 gestartet, dieses mal mit neuen Programmsegmenten oder Befehlen und/oder Daten. Wird in Schritt 620 eine Diskrepanz der Ausgangssignale erkannt, wird als nächstes der Schritt 630 ausgeführt.

Im Schritt 630 wird auf wenigstens einer der Ausführungseinheiten, mindestens aber auf der Ausführungseinheit, die mit der Systemschnittstelle bzw. dem Daten-/Adressbus verbunden ist, die Abarbeitung der aktuellen Programmsequenz weitergeführt Auf einer weiteren Ausführungseinheit wird eine Fehlererkennungsroutine ausgeführt. Dabei muss die Vergleichseinheit deaktiviert werden.

Im Schritt 640 werden die Ergebnisse der Fehlererkennungsroutinen jeweils mit einem Referenzwert verglichen, der zusammen mit dem Programmcode der Fehlererkennungsroutinen abgespeichert ist. Tritt bei diesem Vergleich eine Diskrepanz auf, so wird die Ausführungseinheit, deren Ergebnis beim Vergleich zu einer Diskrepanz geführt hat, als fehlerhaft gekennzeichnet und als nächstes der Schritt 650 ausgeführt. Tritt keine Diskrepanz auf, so wird erneut der Schritt 605 gestartet, dieses mal mit neuen Programmsegmenten oder Befehlen und/oder Daten.

Im Schritt 650 werden die als fehlerhaft gekennzeichneten Ausführungseinheiten abgeschaltet. Dies kann z.B. dadurch erfolgen, dass dieser Ausführungseinheit keine Instruktionen, Daten und/oder Taktsignale zugeführt werden, oder dass die Verbindung dieser Ausführungseinheit zur Vergleichseinheit und zur Systemschnittstelle bzw. zum Daten-/Adressbus unterbrochen wird.

Im Schritt 660 wird das Prozessorsystem mit den verbleibenden, nicht fehlerbehafteten Ausführungseinheiten weiterbetrieben. In einem Prozessorsystem mit zwei Ausführungseinheiten bedeutet dies einen Single-Core Betrieb. Dieser ist bei sicherheitsrelevanten Systemen zeitlich begrenzt.

Im Schritt 670 erfolgt nach Erreichen einer Abschaltbedingung, z.B. nach Überschreiten eines Zeitlimits für den Single-Core Betrieb, ein Abschalten des Prozessorsystems oder eine Umschaltung in einen definierten sicheren Zustand.

## Patentansprüche

1. Verfahren zur Steuerung eines Rechnersystems mit wenigstens zwei Ausführungseinheiten (W110a, W110b) und einer Vergleichseinheit (W120-123), das im Lock-Step betrieben wird und bei dem die Ergebnisse der wenigstens zwei Ausführungseinheiten (W110a, W110b) verglichen werden, **dadurch gekennzeichnet, dass** bei oder nach Erkennen eines Fehlers durch die Vergleichseinheit (W120-123) die aktuelle Befehlssequenz auf genau einer Ausführungseinheit (W110a, W110b) abgebrochen wird, auf dieser einen Ausführungseinheit (W110a, W110b) ein Fehlererkennungsmechanismus abgearbeitet wird, die Vergleichseinheit (W120-123) für die Dauer der Abarbeitung des Fehlererkennungsmechanismus abgeschaltet wird und auf der wenigstens einen weiteren Ausführungseinheit (W110a, W110b) die bestimmungsgemäße Programmfolge weiter abgearbeitet wird.

2. Verfahren nach Anspruch 1, **dadurch gekennzeichnet, dass** nach Abarbeitung des Fehlererkennungsmechanismus der bestimmungsgemäße Programmablauf fortgesetzt wird, falls der Fehlererkennungsmechanismus keinen Fehler erkannt hat.

3. Verfahren nach Anspruch 1, **dadurch gekennzeichnet, dass** bei oder nach Lokalisierung eines Fehlers auf einer Ausführungseinheit (W110a, W110b) die fehlerbehaftete Ausführungseinheit (W110a, W110b) abgeschaltet wird.

4. Verfahren nach Anspruch 3, **dadurch gekennzeichnet, dass** beim Abschalten der Ausführungseinkeit die Vergleichseinheit (W120-123) deaktiviert wird.

5. Verfahren nach Anspruch 3 oder 4, **dadurch gekennzeichnet, dass** bei Deaktivierung wenigstens einer Komponente ein Fehlersignal erzeugt wird, das der Anwendung zur Verfügung gestellt wird.

6. Verfahren nach Anspruch 1, **dadurch gekennzeichnet, dass** nach Auftreten eines Fehlers der Betrieb mit nur einer Ausführungseinheit (W110a, W110b) zeitlich begrenzt ist und das Rechnersystem spätestens nach Ablauf einer zuvor festgelegten Zeit abgeschaltet wird.

7. Verfahren nach Anspruch 6, **dadurch gekennzeichnet, dass** die Abschaltung bereits vor Ablauf einer zuvor festgelegten Zeit durch ein von der Anwendung generiertes Signal erforgt.

8. Rechnersystem mit wenigstens zwei Ausführungseinheiten (W110a, W110b) und einer Vergleichseinheit (W120-123), das im Lock-Step betrieben wird und bei dem die Ergebnisse der wenigstens zwei Ausführungseinheiten (W110a, W110b) verglichen werden, **dadurch gekennzeichnet, dass** Mittel vorhanden sind, welche derart ausgestaltet sind, dass bei oder nach Erkennen eines Fehlers durch die Vergleichseinheit (W120-123) die aktuelle Befehlssequenz auf genau einer Ausführungseinheit (W110a, W110b) abgebrochen wird, auf dieser einen Ausführungseinheit (W110a, W110b) ein Fehlererkennungsmechanismus abgearbeitet wird, die Vergleichseinheit (W120-123) (W110a, W110b) für die Dauer der Abarbeitung des Fehtererkennungsmechanismus abgeschaltet wird und auf der wenigstens einen weiteren Ausführungseinheit (W110a, W110b) die bestimmungsgemäße Programmfolge weiter abgearbeitet wird.

## Claims

1. Method for controlling a computer system with at least two execution units (W110a, W110b) and a comparison unit (W120-123), which is operated in lock-step and in which the results from the at least two execution units (W110a, W110b) are compared, **characterized in that**, upon or following detection of an error by the comparison unit (W120-123), the current instruction sequence in exactly one execution unit (W110a, W110b) is interrupted, an error detection mechanism is executed in this one execution unit (W110a, W110b), the comparison unit (W120-123) is switched off for the duration of the execution of the error detection mechanism, and the intended program sequence continues to be executed in the at least one further execution unit (W110a, W110b).

2. Method according to Claim 1, **characterized in that**, following execution of the error detection mechanism, the intended program sequence is continued if the error detection mechanism has not detected an error.

3. Method according to Claim 1, **characterized in that**, upon or following localization of an error in an execution unit (W110a, W110b), the defective execution unit (W110a, W110b) is switched off.

4. Method according to Claim 3, **characterized in that** the comparison unit (W120-123) is deactivated when switching off the execution unit.

5. Method according to Claim 3 or 4, **characterized in that** an error signal which is made available to the application is generated when deactivating at least one component.

6. Method according to Claim 1, **characterized in that**, following the occurrence of an error, operation with only one execution unit (W110a, W110b) is temporally limited and the computer system is switched off, at the latest, following expiry of a previously determined time.

7. Method according to Claim 6, **characterized in that** the switching-off operation is carried out, even before a previously determined time has expired, by means of a signal generated by the application.

8. Computer system with at least two execution units (W110a, W110b) and a comparison unit (W120-123), which is operated in lock-step and in which the results from the at least two execution units (W110a, W110b) are compared, **characterized in that** means are provided and are configured in such a manner that, upon or following detection of an error by the comparison unit (W120-123), the current instruction sequence in exactly one execution unit (W110a, W110b) is interrupted, an error detection mechanism is executed in this one execution unit (W110a, W110b), the comparison unit (W120-123) is switched off for the duration of the execution of the error detection mechanism, and the intended program sequence continues to be executed in the at least one further execution unit (W110a, W110b).

## Revendications

1. Procédé de commande d'un système de calculateur qui présente au moins deux unités d'exécution (W110a, W110b) et une unité de comparaison (W120-123) qui fonctionne par étapes bloquées et dans laquelle les résultats des deux ou plusieurs unités d'exécution (W110a, W110b) sont comparés,
**caractérisé en ce que**
lors ou à la suite de la détection d'une erreur par l'unité de comparaison (W120-123), la séquence d'ordres en cours est interrompue sur une seule unité d'exécution (W110a, W110b),
**en ce qu'**un mécanisme de détection d'erreur est exécuté sur cette unité d'exécution (W110a, W110b),
**en ce que** l'unité de comparaison (W120-123) est débranchée pendant la durée de l'exécution du mécanisme de détection d'erreur et
**en ce que** la succession correcte du programme continue d'être éxécutée sur la ou les autres unités d'exécution (W110a, W110b).

2. Procédé selon la revendication 1, **caractérisé en ce qu'**après l'exécution du mécanisme de détection d'erreur, le déroulement correct du programme est poursuivi au cas où le mécanisme de détection d'erreur n'a détecté aucune erreur.

3. Procédé selon la revendication 1, **caractérisé en ce que** lors ou à la suite de la localisation d'une erreur sur une unité d'exécution (W110a, W110b), l'unité d'exécution (W110a, W110b) souffrant d'une erreur est débranchée.

4. Procédé selon la revendication 3, **caractérisé en ce que** lors du débranchement de l'unité d'exécution, l'unité de comparaison (W120-123) est désactivée.

5. Procédé selon les revendications 3 ou 4, **caractérisé en ce que** lors de la désactivation d'au moins un composant, un signal d'erreur qui est mis à disposition de l'application est formé.

6. Procédé selon la revendication 1, **caractérisé en ce qu'**après l'apparition d'une erreur, le fonctionnement est limité dans le temps à une seule unité d'exécution (W110a, W110b) et **en ce que** le système de calculateur est débranché au plus tard après l'écoulement d'une durée préalablement définie.

7. Procédé selon la revendication 6, **caractérisé en ce que** le débranchement s'effectue avant l'écoulement d'une durée préalablement définie, par un signal généré par l'application.

8. Système de calculateur qui présente au moins deux unités d'exécution (W110a, W110b) et une unité de comparaison (W120-123) qui fonctionne par étapes bloquées et dans lequel les résultats des deux ou plusieurs unités d'exécution (W110a, W110b) sont comparés,
**caractérisé en ce que**
le système présente des moyens configurés de telle sorte que lors ou à la suite de la détection d'une erreur par l'unité de comparaison (W120-123), la séquence d'ordres en cours est interrompue sur une seule unité d'exécution (W110a, W110b),
**en ce qu'**un mécanisme de détection d'erreur est exécuté sur cette unité d'exécution (W110a, W110b),
**en ce que** l'unité de comparaison (W120-123) est débranchée pendant la durée de l'exécution du mécanisme de détection d'erreur et
**en ce que** la succession correcte du programme est poursuivie sur la ou les autres unités d'exécution (W110a, W110b).
